# EUROPEAN PATENT APPLICATION

(11) **EP 1 333 213 A1**
(43) Date of publication of application: **06.08.2003**
(21) Application number: 02425041.7
(22) Date of filing: 30.01.2002
(51) Int. Cl.: F16L 19/02, B67D 1/08, B67D 3/04

(54) **A dispenser tap**

(71) Applicant: CELLI S.p.A., 47852 Coriano (Rimini) (IT)
(72) Inventor: Castaldi, Bruno, 47030 San Mauro Pascoli (Rimini) (IT)
(74) Representative: Lanzoni, Luciano

(57) **Abstract**

A drinks dispenser tap with toothed joint (6) comprises a plurality of first teeth (1) made inside the tap (4) tubular connector end (3), which can engage with a plurality of second teeth (2), made on the outside of a first free end (51) of a tube (5) which can be fixed to a dispenser column. The first and second teeth (1, 2) stabilise the correct angle of the tap (4) about its longitudinal axis (44), relative to a vertical plane. Advantageously, the entire tap (4), tube (5) and joint (6), as well as the first and second teeth (1, 2), are made of food-safe plastic and the first teeth (1) of the joint (6) are in front of the second teeth (2). All of the immediately adjacent teeth (1, 2) are also radially arranged relative to the axis (44) and have a perfectly identical shape. In this way, between each pair of consecutive teeth (1, 2) there is a cavity (12) whose shape perfectly matches that of each tooth (1, 2), so that the first and second teeth (1, 2) can engage with one another and, when fully engaged, with the front axial contact between the tap (4) and the tube (5), form a single body.

## Description

The present invention relates to a drinks dispenser tap with toothed joint comprising a plurality of first teeth, made inside the tap cylindrical connector end, as well as a plurality of second teeth, made on the outside of a first free end of a cylindrical tube, the second end of the tube engaging integrally with a drinks dispenser column. The first and second teeth engage with one another, stabilising the correct angle of the tap about its horizontal axis, relative to a vertical plane.

Taps of the above-mentioned type are metal, and the joint teeth are also, obviously, metal. The teeth are made in the most simple and effective way, that is to say, with toothing extending axially, parallel with the horizontal axis of the tap. The teeth are very small and, therefore, numerous, allowing adjustment of the angle of the tap in steps with the smallest possible angles, that is to say, with the "finest" possible adjustment. However, this is limited by the need, between one tooth and another, for a space which is noticeably greater than that occupied transversally by a single tooth, to promote, as far as possible, reciprocal axial engagement of the teeth, which would otherwise be rather difficult.

Finally, the teeth on the tap tubular connector end, together with the tap body, can advantageously form a handy toothed key for screwing the tube onto the dispenser column, operating on the corresponding teeth on the free end of the tube.

Having said that, it is important to notice that dispenser taps with joints of this type, which can allow small angling adjustment angles, are all made of metal, unless the important "fine" angling feature is dispensed with.

Only if they are made of metal can the teeth of the above-mentioned joints guarantee that they will remain in good condition for a long period, both during use as a key and during normal use of the tap, normally exposed to torsion stresses.

Moreover, the metal tap, usually made of brass, although ideal for drinks such as beer, is not as suitable for chemically aggressive drinks like wine, sparkling water or soda, or drinks rich in carbon dioxide and other aggressive elements, such as the well-known Coca-Cola. In the latter cases, at greater cost, it is possible to use films of particularly strong metals as a coating, for example food-safe nickel, although the duration of such a solution is also limited. To guarantee lasting effectiveness, stainless steel would have to be used, but the costs would be high.

The aim of the present invention is to overcome the above-mentioned disadvantages by providing a drinks dispenser tap with a joint which can be used for very long periods with any drinks, at the same time keeping its production costs low, with the possibility of achieving very small tap angling adjustment angles.

Other aims and advantages, which are more clearly described in the description which follows, are fulfilled in accordance with the present invention, by a tap as described in the claims herein.

The invention is now described in more detail with reference to the accompanying drawings, in which:
- Figure 1 illustrates an embodiment of the tap according to the present invention, completely made of plastic and indicating the particular configuration and arrangement of the toothed joint;
- Figure 2 is an enlarged front view of a detail of the teeth on the toothed joint;
- Figure 3 is an enlarged view of part of the teeth illustrated in Figure 1.

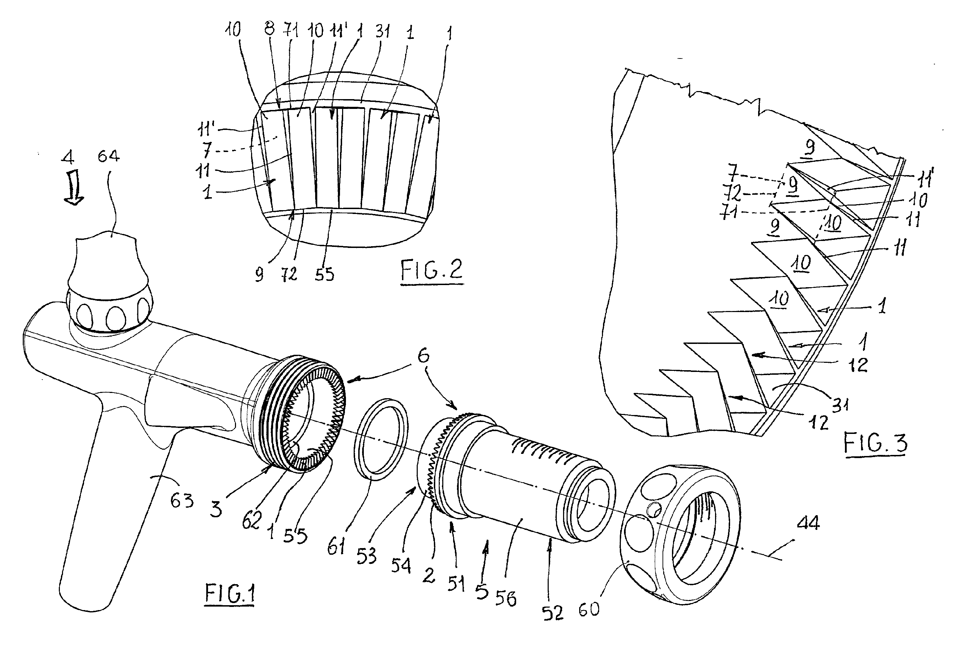

With reference to Figure 1, the numeral 4 indicates a drinks dispenser tap. It has a special toothed joint 6 for connection, with adjustable angle, to a cylindrical tube 5 which fixes the tap to a drinks dispenser column, not illustrated, being of any type and not part of the present invention. The tap 4 is of the type with a joint which uses a ring nut 60 that can be screwed onto the tap 4 cylindrical connector end 3, to force the connector 3 into close contact with the tube 5, with the joint 6 in between. A washer 61 may be inserted in the tap, until it rests on an inner stop 62. When the ring nut 60 is tightened on the connector 3, a tube 5 cylindrical projection 53 makes contact with the washer 61, creating the seal.

The above-mentioned joint normally comprises a plurality of first teeth 1, made inside the tap 4 cylindrical connector end 3, as well as a plurality of second teeth 2, made on the outside of a first free end 51 of the cylindrical tube 5, the second end 52 of the tube engaging, by means of its thread 56, with the drinks dispenser column.

The first and second teeth 1, 2 engage with one another, stabilising the correct angle of the tap 4 about its horizontal axis 44, relative to a vertical plane.

If after fixing the tap 4 to the dispenser column it is not perfectly angled with the dispenser spout 63 and movement knob 64 positioned vertically, the toothed joint 6 may be adjusted by slackening the ring nut 60 enough to disengage the teeth 1, 2 and allow the tap 4 to rotate about its horizontal axis 44 until it reaches the correct new position, then tightening the ring nut 60 again.

The tap 4, tube 5 and joint 6, in particular, are made of food-safe plastic, so that the tap can be used for any drinks and lasts very well.

In such cases, the first teeth 1 of the joint 6 are in front of the second teeth 2, in a direction parallel with the tap 4 horizontal axis 44, arranged radially relative to the axis 44 and all immediately adjacent, with perfectly identical shape. Thus between each pair of consecutive teeth 1, 2 there is a cavity 12 whose shape perfectly matches each tooth 1, 2 so that the first and second teeth 1, 2 can engage with one another and, when fully engaged, with the front axial contact between the tap 4 with the tube 5, form a single body.

In this way, they can be considered strong enough in all circumstances, even when subjected to intense stresses, such as when the tap 4 is used as a toothed key for screwing the tube 5 onto the dispenser column. Since the teeth 1, 2 must engage frontally, it is appropriate and advantageous if they have a substantially prismatic shape, extending radially towards the horizontal axis 44 of the tap 4. Moreover, to increase the maximum compactness and strength of the teeth, the outermost edge 8 of the first teeth 1 and the innermost edge 9 of the second teeth 2, relative to the tap 4 horizontal axis 44, is integral, in a single body, respectively with the inner wall 31 of the tubular connector end 3 of the tap 4 and with the outer wall 54 of the cylindrical projection 53 at the front of the tube 5.

In such cases, the inner wall 31 and the outer wall 54 also respectively make contact with the outermost side 8 of the second teeth 2 and the innermost side 9 of the first teeth 1, when the first and second teeth 1, 2 are fully engaged.

With reference to Figures 2 and 3 in particular each tooth 1, 2 has a shape including the following:
- a substantially trapezoidal base 7 with the larger base 71 further out than the smaller base 72 relative to the tap 4 horizontal axis 44;
- the outermost side 8, also trapezoidal and tending towards the triangular, lies on an outer surface which is preferably cylindrical, corresponding to the surface of the inner wall 31 of the tubular connector end 3 (in particular, the first teeth 1, as indicated above, are integral with the inner wall 31);
- the outermost side 9, which is triangular, lies on a preferably cylindrical inner surface, corresponding to the surface on the outside of which the teeth 1, 2 are distributed (in particular, for the first teeth 1 the surface is that of the inner wall 55 of the connector 3, delimiting the inside of the teeth 1, whilst for the second teeth 2 it is the outer wall 54 with which the second teeth, as indicated above, are integral);
- two angled surfaces 10, inserted between the sides 8 and 9, connected at the top, at the same height, by a flat, substantially triangular surface 11.

Each tooth is separated from the next by a base 11' which perfectly matches the flat surface 11 and, together with the adjacent surfaces 10, forms the cavity 12 whose shape is a perfect match for each tooth 1, 2.

Alternatively, each tooth 1, 2 has a shape with the above-mentioned characteristics, except that both the outermost side 8 and the innermost side 9 of the teeth 1, 2 are trapezoidal and the two angled surfaces 10 are connected at the top by a flat, substantially trapezoidal surface 11, like each consecutive base 11'.

This shape allows maximum facilitation of the reciprocal engagement of the teeth 1, 2, maximum tooth strength and maximum interpenetration, creating a single body, when fully engaged.

Thus, in the preferred embodiment, the substantially trapezoidal base 7 of each tooth 1, 2 has its larger base 71 arched according to the radius of the cylindrical inner wall 31 of the tubular connector end 3 and its smaller base 72 arched according to the inner radius of the cylindrical surface outside which the teeth 1, 2 are distributed. Accordingly, the outermost side 8 and the innermost side 9 have curved surfaces which respectively conform to the cylindrical surface of the inner wall 31 of the tubular connector end 3 and to the cylindrical surface 55 or 54 outside which the teeth 1, 2 are distributed.

It is also evident that the embodiment disclosed may have a large number of consecutive teeth 1, 2, sufficient to allow adjustments to the angle of the tap 4 by angles of just a few degrees. In the embodiment illustrated, there are 60 teeth, for corresponding adjustments in steps of just 6 degrees.

Finally, since, when fully engaged, teeth 1, 2 of this type form a single body, they can also contribute to the tap seal.

The invention described can be subject to modifications and variations without thereby departing from the scope of the inventive concept. Moreover, all the details of the invention may be substituted by technically equivalent elements.

## Claims

1. A drinks dispenser tap with toothed joint comprising a plurality of first teeth (1), made inside the tap (4) cylindrical connector end (3), as well as a plurality of second teeth (2), made on the outside of a first free end (51) of a cylindrical tube (5), the second end (52) of the tube engaging integrally with a drinks dispenser column, the first and second teeth (1, 2) engaging with one another, stabilising the correct angle of the tap (4) about its horizontal axis (44), relative to a vertical plane, the tap being **characterised in that** the tap (4), tube (5) and joint (6) are made of food-safe plastic, the first teeth (1) of the joint (6) being in front of the second teeth (2), in a direction parallel with the tap (4) horizontal axis (44), the first and second teeth (1, 2) being arranged radially relative to the axis (44) and all immediately adjacent, with a perfectly identical shape, there being between each pair of consecutive teeth (1, 2) a corresponding cavity (12) whose shape perfectly matches each tooth (1, 2), allowing the first and second teeth (1, 2) to engage with one another and, when fully engaged, with the frontal axial contact between the tap (4) and the tube (5), to form a single body.

2. The tap according to claim 1, **characterised in that** each tooth (1, 2) has a substantially prismatic shape, extending radially towards the tap (4) horizontal axis (44).

3. The tap according to claim 2, **characterised in that** the outermost side (8) of the first teeth (1) and the innermost side (9) of the second teeth (2), relative to the tap (4) horizontal axis (44), is integral, in a single body, respectively with the inner wall (31) of the tap (4) tubular connector end (3) and with the outer wall (54) of a cylindrical projection (53) at the front of the tube (5), the inner wall (31) and outer wall (54) respectively making contact with the outermost side (8) of the second teeth (2) and the innermost side (9) of the first teeth (1), when the first and second teeth (1, 2) are fully engaged.

4. The tap according to claim 3, **characterised in that** each tooth (1, 2) has a the following shape:
- a substantially trapezoidal base (7) with the larger base (71) further out than the smaller base (72) relative to the tap (4) horizontal axis (44);
- the outermost side (8), also trapezoidal and tending towards the triangular, lying on an outer surface corresponding to the surface of the inner wall (31) of the tubular connector end (3);
- the triangular outermost side (9), lying on an inner surface, corresponding to the surface on the outside of which the teeth (1, 2) are distributed;
- two angled surfaces (10), inserted between the sides (8) and (9), being connected at the top, at the same height, by a flat, substantially triangular surface (11);
each tooth being separated from the next by a base (11') which perfectly matches the flat surface (11).

5. The tap according to claim 3, **characterised in that** each tooth (1, 2) has a the following shape:
- a substantially trapezoidal base (7) with the larger base (71) further out than the smaller base (72) relative to the tap (4) horizontal axis (44);
- the outermost side (8) and the innermost side (9), also trapezoidal, the former lying on an outer surface corresponding to the surface of the inner wall (31) of the tubular connector end (3), and the latter lying on an inner surface, corresponding to the surface on the outside of which the teeth (1, 2) are distributed;
- two angled surfaces (10), inserted between the sides (8) and (9), being connected at the top, at the same height, by a flat, substantially trapezoidal surface (11);
each tooth being separated from the next by a base (11') which perfectly matches the flat surface (11).

6. The tap according to claim 4 or 5, **characterised in that** the substantially trapezoidal base (7) of each tooth (1, 2) has its larger base (71) arched according to the radius of the cylindrical inner wall (31) of the tubular connector end (3) and its smaller base (72) arched according to the inner radius of the cylindrical surface outside which the teeth (1, 2) are distributed, the outermost side (8) and the innermost side (9) having curved surfaces which respectively conform to the cylindrical surface of the inner wall (31) of the tubular connector end (3) and to the cylindrical surface outside which the teeth (1, 2) are distributed.

7. The tap according to any of the foregoing claims, **characterised in that** the number of consecutive teeth (1, 2) is sufficient to allow adjustments to the angle of the tap (4) by angles consisting of just a few degrees.
